# EUROPÄISCHE PATENTSCHRIFT

(11) **EP 0 811 795 B1**
(45) Veröffentlichungstag und Bekanntmachung des Hinweises auf die Patenterteilung: **08.05.2002**
(21) Anmeldenummer: 97810339.8
(22) Anmeldetag: 03.06.1997
(51) Int. Cl.: F16K 31/385

(54) **Servogesteuertes Wasserventil**
Pilot controlled water valve
Robinet d'eau piloté

(30) Priorität: 03.06.1996 CH 140096
(43) Veröffentlichungstag der Anmeldung: 10.12.1997
(73) Patentinhaber: GEBERIT TECHNIK AG, 8645 Jona (CH)
(72) Erfinder: Heierli, Marcel, 9631 Ulisbach (CH); Lobeto, Christian, 8312 Winterberg (CH)
(74) Vertreter: Groner, Manfred

(56) Entgegenhaltungen:
- BE-A- 438 514
- DE-A- 2 043 094
- DE-U- 29 514 308
- GB-A- 1 135 441
- GB-A- 1 374 160
- GB-A- 2 091 451

## Beschreibung

Die Erfindung betrifft ein servogesteuertes Wasserventil gemäss Oberbegriff des Anspruchs 1.

Ein Wasserventil ist aus der DE-C-24 35 256 bekannt. Bei diesem ist das Schliessteil des Pilotventils koaxial an einem weichmagnetischen Magnetanker angebracht. In einer von der Steuerkammer getrennten Magnetkammer befindet sich ein über ein Druckmittel verschiebbarer Magnet. Das Schliessteil des Pilotventils ist vom Sitz des Pilotventil abhebbar, indem der Permanentmagnet entgegen der rückwirkenden Kraft einer Druckfeder an das Schliessteil des Pilotventils angenähert wird. Dieses Ventil ist im Aufbau vergleichsweise kompliziert und benötigt viele Einzelteile. Bei einigen Anwendungen ist zudem die vergleichsweise hohe Bauhöhe nachteilig. Durch die GB 1 374 160 A ist ein Wasserventil bekannt, bei dem ein zweites Schliessteil zum Öffnen und Schliessen des Pilotventils direkt durch ein Druckmittel betätigbar ist.

Der Erfindung liegt die Aufgabe zugrunde, ein servogesteuertes Wasserventil der genannten Gattung zu schaffen, das sich für eine pneumatische Betätigung besser eignet.

Die Aufgabe ist bei einem gattungsgemässen Ventil gemäss Anspruch 1 gelöst. Beim erfindungsgemässen Wasserventil wird das Schliessteil des Pilotventils nicht durch Annäherung eines Permanentmagneten vom Ventilsitz abgehoben, sondern direkt durch ein Druckmittel betätigt. Der ganze magnetische Teil des bekannten Ventils wird damit überflüssig.

Nach einer Weiterbildung der Erfindung erfolgt die Druckentlastung der Steuerkammer über eine Druckentlastungskammer, die mit dem Auslass kommuniziert. Diese Druckentlastungskammer ist durch eine Rollmembran gebildet und wird bei geöffnetem Pilotventil wasserdruckseitig auf einer Fläche beaufschlagt, die wesentlich kleiner ist als die druckmittelbeaufschlagte Wirkfläche des zweiten Schliessteils. Bei einem Staudruck im Auslass ist zum Schliessen des Ventils bereits eine kleine Gegenkraft ausreichend. Es genügt auch eine kleine Federkraft, um die Druckentlastungskammer geschlossen zu halten. Mit diesen Weiterbildungen wird nun eine einwandfreie Funktion auch bei Staudruck in der Auslassleitung erreicht. Vorteilhaft ist zudem, dass zum Schliessen des zweiten Schliessteils eine vergleichsweise klein dimensionierte Feder ausreichend ist. Die Federkraft dieser Druckfeder ist so ausgelegt, dass ein eventuell in der Auslassleitung auftretender Staudruck das zweite Schliessteil nicht bewegen kann.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
Figur 1 einen Schnitt durch ein erfindungsgemässes Wasserventil, und
Figur 2 einen Schnitt gemäss Figur 1, wobei das Ventil geöffnet ist.

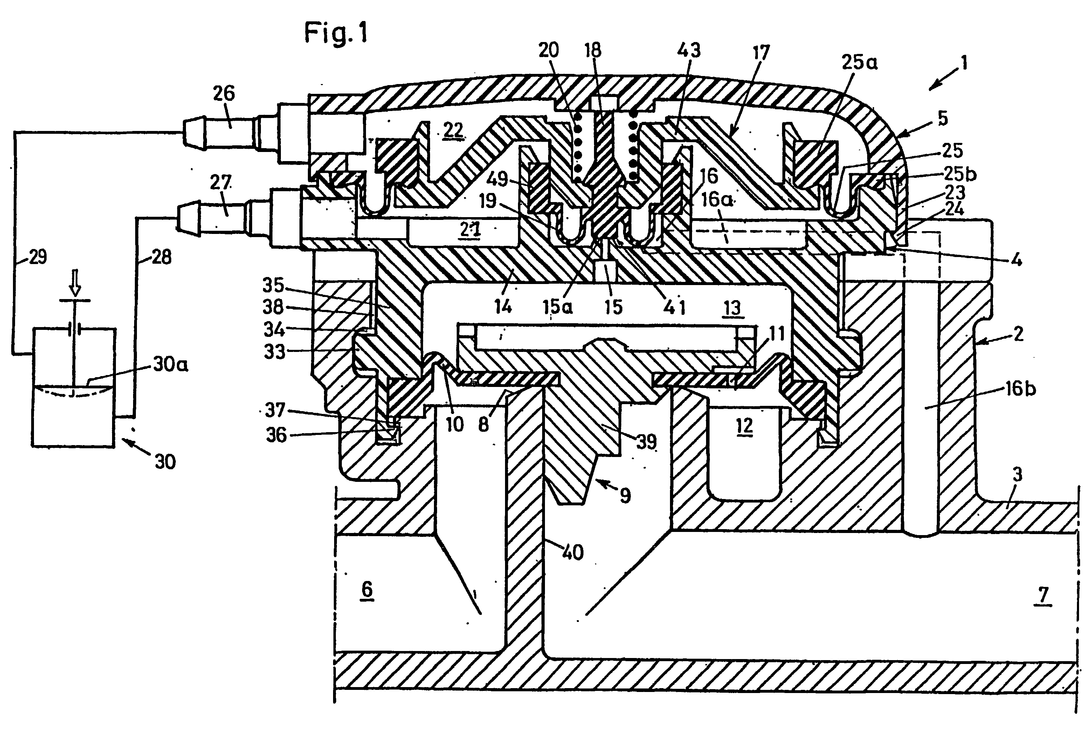

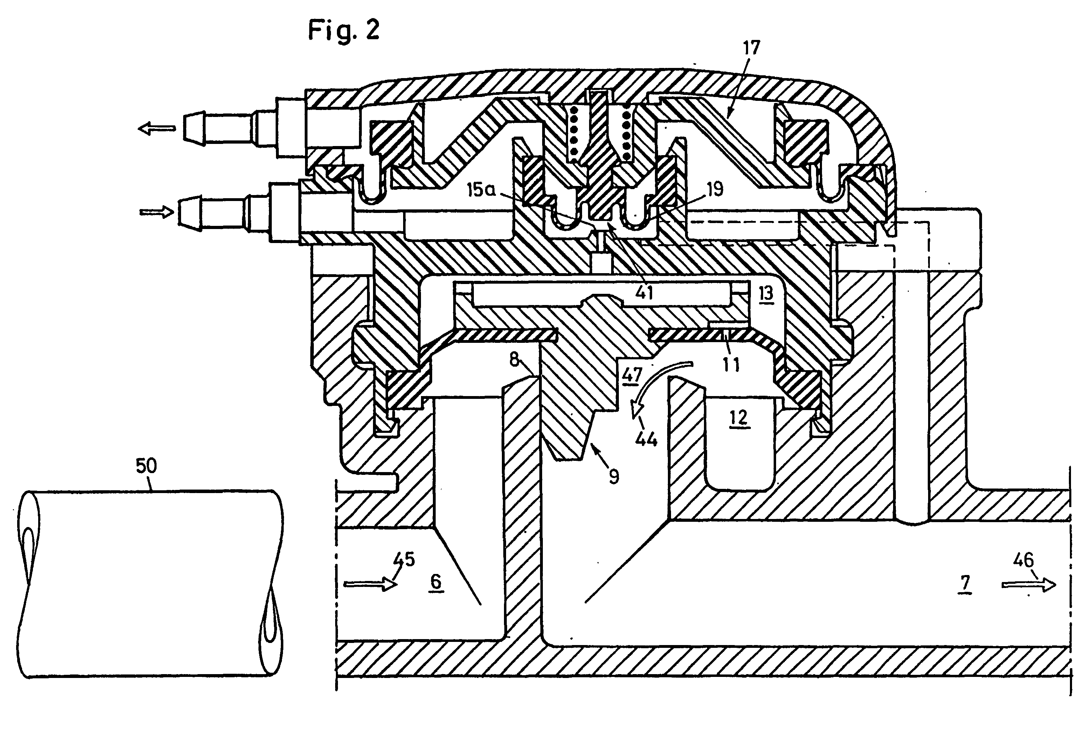

Das in Figuren 1 und 2 gezeigte Wasserventil 1 weist ein Gehäuse 2 auf, das aus drei Gehäuseteilen 3, 4 und 5 aufgebaut ist. Das mittlere Gehäuseteil 4 ist auf das Gehäuseteil 3 aufgeschnappt und weist dazu einen Rastring 35 auf, der in eine Ausnehmung 38 des Gehäuseteils 3 eingreift und mit Rastnocken 36 einen Rastrand 37 des Gehäusteils 3 untergreift. Wie ersichtlich sind Nocken 33 in seitliche Ausnehmungen 34 des Gehäuseteils 3 eingerastet. Der Gehäuseteil 5 ist deckelförmig ausgebildet und auf den Gehäuseteil 4 aufgerastet und weist dazu mehrere über den Umfang verteilte Rastzungen 23 auf, die eine Schulter 24 des Gehäusteils 4 untergreifen. Das Gehäuse 2 lässt sich somit sehr einfach ohne Werkzeuge zusammenbauen. Wenigstens die Gehäusteile 4 und 5 sind Spritzgussteile aus einem geeigneten Kunststoff.

Das Gehäuseteil 3 besitzt einen Einlass 6 und einen Auslass 7 sowie einen ringförmigen Ventilsitz 8, der von einer ringförmigen Einströmkammer 12 umgeben ist. Diese Einströmkammer 12 kommuniziert über eine kleine Drosselöffnung 11 in einer gummielastischen Membran 10 eines ersten Schliessteils 9 mit einer Steuerkammer 13. Die Membran 10 ist an einem Umfangsrand zwischen dem Gehäuseteil 3 und dem Gehäuseteil 4 eingespannt und dichtet diese beiden Gehäuseteile gegeneinander ab. Die Membran 10 trägt mittig ein Versteifungsteil 39, das mit geringem Spiel in einem vertikal aufsteigenden Teil 40 des Auslasses 7 verschiebbar geführt ist.

Das Gehäuseteil 4 bildet mit einer Wandung 14 einen oberen Abschluss der Steuerkammer 13 und besitzt mittig eine sogenannte Pilotöffnung 15, die rückseitig der Wandung 14 mit einem zweiten Schliessteil 17 ein Pilotventil 41 bildet. Bei geöffnetem Pilotventil gemäss Figur 2 mündet die Pilotöffnung 15 in eine Drukkentlastungskammer 16, die über einen radialen Kanal 16a im Gehäuseteil 4 sowie einem damit verbundenen vertikalen Kanal 16b im Gehäuseteil 3 mit dem Auslass 7 kommuniziert. Die Druckentlastungskammer 16 ist vergleichsweise klein dimensioniert und wird durch eine Rollmembran 19 gebildet, an der mittig ein Schliesskolben 18 angeformt ist. Ein Umfangsrand 49 der Membran 19 ist an einem ringförmigen Befestigungsteil auf der Rückseite der Wandung 14 eingespannt. Der Schliesskolben 18 ist fest an einem tellerförmigen Versteifungsteil 43 des zweiten Schliessteils 17 angebracht.

Das zweite Schliessteil 17 dichtet eine untere pneumatische Kammer 21 gegenüber einer oberen pneumatischen Kammer 22 ab. Dazu ist am Umfang des Versteifungsteils 43 eine Rollmembran 25 mit einem inneren Rand 25a am Versteifungsteil 43 und mit einem äusseren Rand 25b zwischen den Gehäuseteilen 4 und 5 eingespannt. Eine Druckfeder 20 hält das zweite Schliessteil 17 in der in Figur 1 gezeigten Schliessstellung und ist an einem unteren Ende am Versteifungsteil 43 und am oberen Ende innenseitig am Gehäuseteil 5 abgestützt. Die untere Kammer 21 ist über einen Nippel 27 und eine Druckleitung 28 mit einem pneumatischen Taster 30 verbunden. Bei der Betätigung des Tasters 30, der beispielsweise ein Handdrücker mit einer Membranblase 30a ist, kann in der Kammer 21 ein Druck von beispielsweise 0,05 bar aufgebaut werden. Die obere Kammer 22 ist über einen Nippel 26 und eine Leitung 29 ebenfalls mit dem pneumatischen Taster 30 verbunden, mit dem jedoch in der Kammer 22 ein Unterdruck von beispielsweise ebenfalls 0,05 bar erzeugt werden kann. Das zweite Schliessteil 17 ist somit mit dem Taster 30 mit einem pneumatischen Unterdruck und einem Überdruck beaufschlagbar. Denkbar ist auch eine Ausführung, bei welcher der Nippel 26 offen und der Nippel 27 zur Erzeugung eines Überdrucks in der Kammer 21 an einen pneumatischen Taster angeschlossen ist. Schliesslich kann auch der Nippel 27 offen sein und der Nippel 26 an einen pneumatischen Taster angeschlossen sein, mit dem ein Unterdruck in der Kammer 22 erzeugt werden kann. In allen Fällen kann das zweite Schliessteil 17 durch eine Druckdifferenz gegen die rückwirkende Kraft der Druckfeder 20 angehoben und damit der Schliesskolben 18 vom Ventilsitz 15a der Pilotöffnung 15 abgehoben werden.

Nachfolgend wird die Wirkungsweise des Ventils 1 näher erläutert. Ist das Ventil 1 an eine Druckwasserleitung 50 angeschlossen, so ist die Einströmkammer 12 als auch die Steuerkammer 13 mit Wasser gefüllt. Die Drosselöffnung 11 in der Membran 10 bewirkt, dass der Druck in der Steuerkammer 13 im wesentlichen gleich dem Wasserdruck in der Einströmkammer 12 ist. Da nun das erste Schliessteil 9 in der Steuerkammer 13 eine grössere Wirkfläche besitzt als in der Einströmkammer 12, resultiert eine Kraft, welche das Schliessteil 9 in Figur 1 nach unten am Ventilsitz 8 anpresst.

Um das Ventil zu öffnen, wird in einer der oben erwähnten Weise durch Betätigen der Taste 30 das zweite Schliessteil 17 mit einem pneumatischen Unter- und/oder Überdruck beaufschlagt. Das zweite Schliessteil 17 wird durch den Differenzdruck gegen die rückwirkende Kraft der Feder 20 angehoben, bis es innenseitig am Gehäuseteil 5 anliegt. Das Pilotventil 41 ist nun offen und Wasser fliesst durch die Öffnung 15 aus der Steuerkammer 13 in die Druckentlastungskammer 16 und von dieser durch die Kanäle 16a und 16b in den Auslass 7. Der Druckabfall in der Steuerkammer 13 und der im wesentlichen gleichbleibende Wasserdruck im Einströmkanal 12 haben zur Folge, dass das erste Schliessteil 9 vom Ventilsitz in die in Figur 2 gezeigte Stellung abgehoben wird. Das in Richtung des Pfeiles 45 beim Einlass 6 einströmende Wasser kann nun durch eine Öffnung 47 in Richtung des Pfeils 44 in den Auslass 7 strömen und diesen in Richtung des Pfeiles 46 verlassen. Das Ventil 1 bleibt geöffnet, solange ein pneumatischer Differenzdruck das zweite Schliessteil 17 in der Figur 2 gezeigten Position hält.

Das Ventil 1 wird wieder geschlossen, indem der genannte pneumatische Differenzdruck aufgehoben wird, indem sich beispielsweise die Membranblase 30a des Tasters 30 selbsttätig entspannt. Die Druckfeder 20 bewegt sich nun nach unten und zwingt den Ventilkolben 18 auf den Ventilsitz 15a des Pilotventils 41. Da nun der Durchgang 15 geschlossen ist, baut sich sehr schnell in der Steuerkammer 13 ein Wasserdruck auf, der gleich ist dem Wasserdruck in der Einströmkammer 12. Aufgrund der bereits oben erwähnten resultierenden nach unten wirkenden Kraft wird das erste Schliessteil 9 nach unten bewegt und am Ventilsitz 8 angepresst. Das Ventil 1 ist nun wieder geschlossen. Bei hohem Anschlussdruck kann im Auslass 7 ein vergleichsweise hoher Staudruck entstehen, welcher den Druck in der Druckentlastungskammer 16 kurzfristig erhöht. Da nun die Wirkfläche des zweiten Schliessteils 17 wesentlich kleiner ist als die druckmittelbeaufschlagte Wirkfläche dieses Schliessteils 17, ist die Krafteinwirkung auf das Schliessteil 17 vergleichsweise klein und kann jedenfalls die Druckfeder 20 nicht verkürzen.

## Patentansprüche

1. Servogesteuertes Wasserventil mit einem zwischen einem Einlass (6) und einem Auslass (7) angeordneten Ventilsitz (8), der durch ein erstes bewegliches Schliessteil (9) verschliessbar ist, und mit einer Steuerkammer (13), die über eine Drosselöffnung (11) mit dem Einlass (6) verbunden ist und die zu ihrer Druckentlastung über ein Pilotventil (41), das ein zweites Schliessteil (17) aufweist, mit einem weiteren Raum (16) verbindbar ist, wobei das zweite Schliessteil (17) zum Öffnen und Schliessen des Pilotventils (41) direkt durch ein Druckmittel betätigbar ist, **dadurch gekennzeichnet, dass** das zweite Schliessteil (17) eine untere pneumatische Kammer (21) des Pilotventils (41) gegen eine obere pneumatische Kammer (22) des Pilotventils (41) abdichtet, und dass beide Kammern (21) jeweils an eine pneumatische Leitung (28,29) anschliessbar sind und sich von der Steuerkammer (13) unterscheiden.

2. Ventil nach Anspruch 1, **dadurch gekennzeichnet, dass** das zweite Schliessteil (17) als Kolben ausgebildet ist.

3. Ventil nach Anspruch 1 oder 2, **dadurch gekennzeichnet, dass** das zweite Schliessteil (17) ein Differentialkolben ist.

4. Ventil nach einem der Ansprüche 1 bis 3, **dadurch gekennzeichnet, dass** die Öffnung (15) des Pilotventils (41) durch eine feste Wandung (14) der Steuerkammer hindurchgeht.

5. Ventil nach Anspruch 4, **dadurch gekennzeichnet, dass** die Öffnung (15) des Pilotventils (41) auf der Seite des zweiten Schliessteils (17) bei geöffnetem Pilotventil (41) mit einer Druckentlastungskammer (16) verbunden ist, die mit dem Auslass (7) kommuniziert.

6. Ventil nach einem der Ansprüche 1 bis 5, **dadurch gekennzeichnet, dass** das zweite Schliessteil (17) bei geöffnetem Pilotventil (41) wasserdruckseitig auf einer Fläche (19a) beaufschlagt ist, die wesentlich kleiner ist als die druckmittelbeaufschlagte Wirkfläche des zweiten Schliessteils (17).

7. Ventil nach Anspruch 6, **dadurch gekennzeichnet, dass** die wasserdruckseitige Fläche (19a) im wesentlichen durch eine Membran (19), insbesondere Rollmembran gebildet ist, an welcher ein Schliesskolben (18) befestigt ist.

8. Ventil nach einem der Ansprüche 1 bis 7, **dadurch gekennzeichnet, dass** das zweite Schliessteil (17) mit einem pneumatischen Unter- und/oder Überdruck beaufschlagbar ist.

9. Ventil nach Anspruch 8, **dadurch gekennzeichnet, dass** die Schliessbewegung des Pilotventils (41) durch einen nachlassenden Unter- und/oder Überdruck erwirkbar ist.

10. Ventil nach einem der Ansprüche 1 bis 9, **dadurch gekennzeichnet, dass** das zweite Schliessteil (17) mittels einer Druckfeder (20) in die Schliesstellung zurückgestellt wird.

11. Ventil nach einem der Ansprüche 1 bis 10, **dadurch gekennzeichnet, dass** es wenigstens einen aufgeschnappten Gehäuseteil (3, 4, 5) aufweist.

12. Ventil nach Anspruch 11, **dadurch gekennzeichnet, dass** wenigstens ein Gehäuseteil (4, 5) ein Schliessteil aufnimmt.

13. Ventil nach Anspruch 11 oder 12, **dadurch gekennzeichnet, dass** ein deckelartiger Gehäuseteil (5) auf einen weiteren Gehäuseteil (4) lösbar aufgeschnappt ist und dieser dekkelartige Gehäuseteil (5) das zweite Schliessteil (17) und der andere Gehäuseteil das erste Schliessteil (9) aufnehmen.

## Claims

1. Servo-controlled water valve, with a valve seat (8) which is arranged between an inlet (6) and an outlet (7) and is capable of being closed by means of a first movable closing part (9), and with a control chamber (13) which is connected to the inlet (6) via a throttle orifice (11) and, for relieving said throttle orifice of pressure, is capable of being connected to a further space (16) via a pilot valve (41) having a second closing part (17), the second closing part (17) being capable of being actuated directly by a pressure medium for the opening and closing of the pilot valve (41), **characterized in that** the second closing part (17) closes off a lower pneumatic chamber (21) of the pilot valve (41) from an upper pneumatic chamber (22) of the pilot valve (41), and **in that** the two chambers (21) are capable of being connected in each case to a pneumatic line (28, 29) and are distinguished from the control chamber (13).

2. Valve according to Claim 1, **characterized in that** the second closing part (17) is designed as a piston.

3. Valve according to Claim 1 or 2, **characterized in that** the second closing part (17) is a differential piston.

4. Valve according to one of Claims 1 to 3, **characterized in that** the orifice (15) of the pilot valve (41) passes through a fixed wall (14) of the control chamber.

5. Valve according to Claim 4, **characterized in that**, with the pilot valve (41) open, the orifice (15) of the pilot valve (41) on the same side as the second closing part (17) is connected to a pressure relief chamber (16) which communicates with the outlet (7).

6. Valve according to one of Claims 1 to 5, **characterized in that**, with the pilot valve (41) open, the second closing part (17) is acted upon, on the water-pressure side, on a surface (19a) which is substantially smaller than that operative surface of the second closing part (17) upon which the pressure medium acts.

7. Valve according to Claim 6, **characterized in that** the surface (19a) on the water-pressure side is formed essentially by a diaphragm (19), in particular a roll diaphragm, to which a closing piston (18) is fastened.

8. Valve according to one of Claims 1 to 7, **characterized in that** the second closing part (17) is capable of being acted upon by a pneumatic underpressure and/or overpressure.

9. Valve according to Claim 8, **characterized in that** the closing movement of the pilot valve (41) can be brought about by a decreasing underpressure and/or overpressure.

10. Valve according to one of Claims 1 to 9, **characterized in that** the second closing part (17) is returned to the closing position by means of a compression spring (20).

11. Valve according to one of Claims 1 to 10, **characterized in that** it has at least one snapped-on housing part (3, 4, 5).

12. Valve according to Claim 11, **characterized in that** at least one housing part (4, 5) receives a closing part.

13. Valve according to Claim 11 or 12, **characterized in that** a lid-like housing part (5) is snapped releasably onto a further housing part (4), and this lid-like housing part (5) receives the second closing part (17) and the other housing part receives the first closing part (9).

## Revendications

1. Soupape hydraulique à servocommande dotée d'un siège de soupape (8) disposé entre une admission (6) et une sortie (7), qui peut être fermé à l'aide d'un premier élément de fermeture mobile (9), et dotée d'une chambre de commande (13), qui est reliée à l'admission (6) au moyen d'un orifice d'étranglement (11) et qui peut être reliée à une autre chambre (16) pour sa décompression par l'intermédiaire d'une soupape-pilote (41) qui présente un second élément de fermeture (17), moyennant quoi le second élément de fermeture (17) peut être actionné directement par des moyens de pression pour ouvrir et fermer la soupape-pilote (41), **caractérisée en ce que** le second élément de fermeture (17) rend étanche une chambre pneumatique inférieure (21) de la soupape-pilote (41) par rapport à une chambre pneumatique supérieure (22) de la soupape-pilote (41) et **en ce que** les deux chambres (21, 22) peuvent respectivement être raccordées à un conduit pneumatique (28, 29) et **en ce qu'**elles se différencient de la chambre de commande (13).

2. Soupape selon la revendication 1, **caractérisée en ce que** le second élément de fermeture (17) est conçu sous forme de piston.

3. Soupape selon la revendication 1 ou 2, **caractérisée en ce que** le second élément de fermeture (17) est un piston différentiel.

4. Soupape selon l'une des revendications 1 à 3, **caractérisée en ce que** l'ouverture (15) de la soupape-pilote (41) traverse une paroi fixe (14) de la chambre de commande.

5. Soupape selon la revendication 4, **caractérisée en ce que** l'ouverture (15) de la soupape-pilote (41) est reliée, sur le côté du second élément de fermeture (17), à une chambre de décompression (16), lorsque la soupape-pilote (41) est ouverte, laquelle chambre communique avec la sortie (7).

6. Soupape selon l'une des revendications 1 à 5, **caractérisée en ce que** le second élément de fermeture (17) est appuyé, du côté de la pression hydraulique, sur une surface (19a), lorsque la soupape-pilote (41) est ouverte, qui est sensiblement plus petite que la surface active du second élément de fermeture (17) pouvant être sollicitée par les moyens de pression.

7. Soupape selon la revendication 6, **caractérisée en ce que** la surface côté pression hydraulique (19a) est essentiellement formée par une membrane (19), plus particulièrement une membrane roulante, sur laquelle est fixé un piston de fermeture (18).

8. Soupape selon l'une des revendications 1 à 7, **caractérisée en ce que** le second élément de fermeture (17) peut être actionné grâce à une dépression et/ou surpression pneumatique.

9. Soupape selon la revendication 8, **caractérisée en ce que** le mouvement de fermeture de la soupape-pilote (41) peut être obtenu par une dépression et/ou surpression intermittente.

10. Soupape selon l'une des revendications 1 à 9, **caractérisée en ce que** le second élément de fermeture (17) est décalé vers l'arrière au moyen d'un ressort de pression (20) pour venir en position de fermeture.

11. Soupape selon l'une des revendications 1 à 10, **caractérisée en ce qu'**elle présente au moins une partie de boîtier (3, 4, 5) verrouillée par ressort.

12. Soupape selon la revendication 11, **caractérisée en ce qu'**au moins une partie de boîtier (4, 5) reçoit un élément de fermeture.

13. Soupape selon la revendication 11 ou 12, **caractérisée en ce qu'**une partie de boîtier en forme de couvercle (5) peut être verrouillée par ressort de manière détachable sur une autre partie de boîtier (4) et **en ce que** cette partie de boîtier en forme de couvercle (5) et l'autre partie de boîtier reçoivent le second élément de fermeture (17) et le premier élément de fermeture (9).
